Europäisches Patentamt

European Patent Office

Office européen des brevets

(11) Veröffentlichungsnummer: **0 203 349**
**B1**

# EUROPÄISCHE PATENTSCHRIFT

(45) Veröffentlichungstag der Patentschrift:
21.06.89

(21) Anmeldenummer: 86105395.7

(22) Anmeldetag: 18.04.86

(51) Int. Cl.⁴: **C 09 D 11/10,** C 08 G 59/18,
C 08 L 63/00 //
(C08L63/00, 77:00)

(54) **Verwendung von härtbaren Kunstharzmischungen für Druckfarben und Überdrucklacke, Verfahren zum Bedrucken von Oberflächen und Mittel für das Verfahren.**

(30) Priorität: 11.05.85 DE 3517013

(43) Veröffentlichungstag der Anmeldung:
03.12.86 Patentblatt 86/49

(45) Bekanntmachung des Hinweises auf die Patenterteilung:
21.06.89 Patentblatt 89/25

(84) Benannte Vertragsstaaten:
AT BE CH DE FR GB IT LI LU NL SE

(56) Entgegenhaltungen:
EP-A-0 004 850
EP-A-0 047 364
FR-A-2 210 643
GB-A-968 484

(73) Patentinhaber: **SCHERING AKTIENGESELLSCHAFT**
**Berlin und Bergkamen, Waldstrasse 14 Postfach**
**15 40, D-4709 Bergkamen (DE)**

(72) Erfinder: **Drawert, Manfred, Dr. Dipl.- Chem., Alte**
**Kreisstrasse 13, D-5758 Fröndenberg (DE)**
Erfinder: **Krase, Horst, Unterster Kamp 13, D-4700**
**Hamm 1 (DE)**
Erfinder: **Skoda, Hans Dieter, Schäferstrasse 39 a,**
**D-4708 Kamen (DE)**

EP 0 203 349 B1

**Beschreibung**

Die Erfindung betrifft die Verwendung von härtbaren Kunstharzmischungen für Druckfarben und für Überdrucklacke, bestehend aus Epoxidharz/Härter-Mischungen und Polyamiden sowie ein Verfahren zum Bedrucken von Oberflächen und Mittel für das Verfahren.

Der vor allen in den letzten Jahren sprunghaft gestiegene Bedarf an Verpackungsmaterialen, insbesondere in der Konsumgüter- und Lebensmittelindustrie, hat geänderte Verpackungstechniken erforderlich gemacht. Aufgrund dieser geänderten Verpackungstechniken sind auch die Anforderungen der Praxis an die verwendeten Druckfarben rapide gestiegen. Die erforderlichen hohen Temperaturbeständigkeiten für die immer kürzer werdenden Versiegelungszeiten sowie die aufgrund verschärfter Lebensmittelgesetze erforderlichen Beständigkeiten gegenüber Wasser, Säuren, Basen und insbesondere Fetten und Ölen sind bei den bislang verwendeten thermoplastischen Bindemitteln nicht mehr in ausreichendem Maße gegeben.

Bei der Verwendung von zweikomponentigen Farben auf der Basis von Epoxidharz/Härter-Systemen wurde zwar die Chemikalienbeständigkeit der Überzüge verbessert, jedoch ist die Siegelfestigkeit für die Praxis nicht immer ausreichend hoch genug. Systeme dieser Art werden in der DE-AS-1 494 525 beschrieben. Zur Erzielung klarer Lösungen mußte darüberhinaus das Lösungsmittel einen relativ hohen Anteil an Aromaten enthalten.

Aus Gründen der in jüngerer Zeit immer stärker in den Vordergrund getretenen Berücksichtigung des Arbeitsplatz und Umweltschutzes fordert die Praxis aber Bindemittel für Überdrucklacke und Druckfarben, welche in aromatenfreien Lösungsmitteln gut löslich sind. Der Einsatz von Aromaten ist auch aus technologischen Gründen unerwünscht, da es hierbei zum Anquellen der im Flexodruck verwendeten Gummi- und Polymer-Klischees kommen kann.

In der DE-AS-2 733 597 und der DE-OS-2 811 700 werden Epoxidharz/Härter-Mischungen beschrieben, welche in aromatenfreien Lösungsmitteln klar löslich sind und welche auch den Anforderungen der Praxis hinsichtlich Filmeigenschaften und Chemikalienbeständigkeiten weitgehend entsprechen. Hinsichtlich Druckgeschwindigkeit und hinsichtlich der Siegelfestgkeit der Druckfilme sind jedoch noch Verbesserungen wünschenswert.

In der US-PS-2 865 870 werden Überzugsmittel auf Basis von Epoxidharz/Härter-Mischungen und Celluloseaceto-Butyraten beschrieben. In diesem System wird eine Lösung eines festen Epoxidharzes und eines Polyaminoamids mit einen Aminwasserstoffäquivalentgewicht von 237 verwendet, welches keine klaren Filme ergibt und in der Hitze ausgehärtet werden muß.

Aufgabe der vorliegenden Erfindung war es, härtbare, in aromatenfreien Lösungsmitteln gut lösliche Bindemittelsysteme zu finden, die nach dem Abdunsten des Lösungsmittels erst physikalisch trockene und klare und nach Härtung bei Raumtemperatur bzw. wenig erhöhter Temperatur chemikalienbeständige Filme ergeben und die hohe Siegelfestigkeiten bis zu 250°C aufweisen, so daß sie auf schnell laufenden modernen Verpackungsmaschinen verarbeitet werden können.

Diese Aufgabe wird erfindungsgemäß gelöst durch die Verwendung von härtbaren Kunstharzmischungen, die nach dem Abdunsten des Lösungsmittels physikalisch trockene und klare Filme ergeben und die bei Raumtemperatur bzw. wenig erhöhter Temperatur aushärten, als Bindemittel für Druckfarben und für Überdrucklacke, welches dadurch gekennzeichnet ist, daß die Kunstharzmischungen bestehen aus

A) Glycidylverbindungen mit mehr als einer Epoxidgruppe pro Molekül und Epoxidwerten von 0,4 bis 0,7 und
B) mindestens einer festen Kunstharzkomponente mit freien Aminogruppen, bestehend aus einem Addukt aus
1. einem Überschuß eines Polyaminoamids aus
a) dimerer Fettsäure und
b) Äthylendiamin und
c) mindestens einem gegebenenfalls substituierten, gegebenenfalls Heteroatome enthaltenden aliphatischen und/oder cycloaliphatischen Diamin,
wobei das Verhältnis von b) c) zwischen 0,95 : 0,05 bis 0,5 : 0,5 liegen kann und
2. einer Glycidylverbindung mit mehr als einer Epoxidgruppe pro Molekül und Epoxidwerten von 0,4 - 0,7,
worin bis zu 0,30 Aminwasserstoffäquivalente des Polyaminoamids gemäß 1. durch die Glycidylverbindungen gemäß 2. voraddukiert sind und
C) einem festen Polyamid, bestehend aus
a) dimerer Fettsäure und
b) Äthylendiamin und gegebenenfalls
c) mindestens einem gegebenenfalls substituierten, gegebenenfalls Heteroatome enthaltenden aliphatischen und/oder heterocyclischen Diamin
worin das Verhältnis von b) : c) zwischen 1,0 : 0 bis 0,5 : 0,5 Äquivalenten variiert werden kann, und
d) mindestens einer kurzen geradkettigen aliphatischen Monocarbonsäure in Mengen von 0,4 bis 0,8, insbesondere 0,5 bis 0,7 Äquivalenten, bezogen auf Gesamtsäureäquivalente,
wobei im wesentlichen äquivalente Mengen der Säure- und Aminkomponenten eingesetzt werden und
worin A) : B) in im wesentlichen äquivalenten Mengen bezogen auf Epoxidgruppen und Aminwasserstoffatome, und worin A) + B) : C) im Verhältnis von 9 : 1 bis 1,5 : 1 (Gewichtsteile) vorliegen können, und
D) aromatenfreien Lösungsmitteln und gegebenenfalls

2

E) Pigmenten, Farbstoffen, Beschleunigern, Netz- und Verlaufsmitteln.

Ein weiterer Gegenstand der Erfindung ist ein Verfahren zum Bedrucken von Oberflächen, welches dadurch gekennzeichnet ist, daß als Bindemittel Kunstharzmischungen gemäß den Ansprüchen verwendet wird.

Ein weiterer Gegenstand der Erfindung ist ein Mittel für das Verfahren zum Bedrucken von Oberflächen, welches dadurch gekennzeichnet ist, daß als Bindemittel Kunstharzmischungen gemäß den Ansprüchen verwendet wird.

Die erfindungsgemäß mitverwendeten Epoxidharze, welche sowohl allein als auch in Mischung eingesetzt werden können, sind flüssige bis halbfeste aromatische Glycidyläther mit mehr als einer Epoxidgruppe pro Molekül, die sich von mehrwertigen Phenolen, insbesondere Bisphenolen, ableiten, oder flüssige aliphatische oder cycloaliphatische Glycidyläther, die sich von aliphatischen mehrwertigen Alkanolen, insbesondere Äthandiol, Propandiol, Butandiol, Pentandiol, Hexandiol, Dipropylenglykol, Tripropylenglykol, Tetrapropylenglykol, Nonapropylenglykol, Tetraäthylenglykol, Neopentylglykol, Glycerin, Diglycerin, Pentaerythrit, 1,4-Dimethylol-cyclohexan und deren Epoxidwerte zwischen 0,4 und 0,7, insbesondere zwischen 0,40 und 0,56 bei aromatischen Glycidyläthern auf Basis von Bisphenol A und/oder Bisphenol F und 0,6 bis 0,7 bei aliphatischen Glycidyläthern auf Basis von Neopentylglykol, Hexandiol, Glycerin und Diglycerin liegen.

Der Ausdruck Epoxidwert wird in der auf diesem Gebiet üblichen Definition angewendet und gibt die Zahl der Epoxidgruppen pro 100 g Epoxidharz an.

Die erfindungsgemäß als Härtungsmittel mitverwendeten festen Härtungsmittel gemäß B) sind Addukte aus überschüssigen Polyaminoamiden und Glycidylverbindungen.

Die Polyaminoamide sind Kondensationsprodukte aus dimerer Fettsäure, Ethylendiamin und mindestens einem aliphatischen oder cycloaliphatischen Co-Diamin, welches gegebenenfalls auch substituiert sein oder Heteroatome, wie insbesondere Sauerstoffatome, enthalten kann. Erfindungsgemäß bevorzugt werden 1-Amino-3,5,5-trimethyl-3-aminomethyl-cyclohexan (Isophorondiamin), 1,2-Diaminopropan, das Isomerengemisch von 1,6-Diamino-2,2,4(2,4,4)-trimethylhexan und 1,12-Diamino-4,9-dioxa-dodekan (Butandiolätherdiamin), 1,6-Diamino-hexan, 3(4),8(9)-Bis(aminomethyl)tricyclo-[5.2.1.0$^{2,6}$]-dekan (techn. Isomerengemisch), Piperazin, 1,4-Diaminobutan, 1,9-Diaminononan, 1,12-Diaminododekan, 2-Methyl-1,5-diaminopentan, 2,2-Dimethyl-1,3-diaminopropan, 1,2-Diaminocyclohexan, 3,3'-Dimethyl-4,4'-diaminodicyclohexylmethan, 1-Amino-4(-gamma-aminopropyl)-cyclohexan, 1-Methyl-4-(1-amino-methylethyl)-cyclohexylamin, 1,10-Diamino-4,7-dioxadekan, 1,14-Diamino-4,11-dioxatetradekan, 1,13-Diamino-4,7,10-trioxa-tridekan, N-Aminoethyl-piperazin, 1,3-Dipiperidylpropan, 1,3-Dipiperazinylpropan, 1,2-Diperazinylethan, Dipiperazinylmethan.

Das Verhältnis von Ethylendiamin zu Co-Diamin kann in einem Bereich von 0,95 : 0,05 bis 0,5 : 0,5, vorzugsweise von 0,9 : 0,1 bis 0,8 : 0,2 variiert werden, wobei die Gesamtaminmenge in einem solchen Überschuß eingesetzt wird, daß das resultierende feste Polyaminoamid Aminzahlen zwischen ca. 30 - 60, insbesondere von 45 - 55, aufweist.

Der Ausdruck Aminzahl (AZ) hat die auf dem vorliegenden Gebiet übliche Bedeutung. Er gibt die Menge an Milligramm KOH an, welche dem Basengehalt von 1 Gramm Polyaminoamid ermittelt durch Titration mit HCl-äquivalent ist.

Der Ausdruck dimere Fettsäure bezieht sich auf die im Handel befindlichen technischen polymerisierten Fettsäuren. Er bezeichnet in allgemeiner Form polymerisierte Säuren, die aus "Fettsäuren" erhalten werden. Der Ausdruck Fettsäure umfaßt ungesättigte natürliche und synthetische einbasische aliphatische Säuren mit 12 - 22 Kohlenstoffatomen, bevorzugt 18 Kohlenstoffatomen. Diese Fettsäuren lassen sich nach den allgemein bekannten Verfahren polymerisieren (vgl. z. B. US-PS-2 482 761, US-PS-3 256 304).

Typische in Handel erhältliche polymere Fettsäuren haben etwa folgende Zusammensetzung:

| | |
|---|---|
| monomere Säuren (MO) | 5 - 15 Gewichtsprozent |
| dimere Säuren (Di) | 60 - 80 Gewichtsprozent |
| trimere und höher polymerisierte Säuren (Tri) | 10 - 35 Gewichtsprozent |

Es können auch Fettsäuren verwendet werden, deren Gehalt an dimerer Säure durch die allgemein bekannten Destillationsverfahren auf 100 Gew.-% erhöht wurde oder die nach bekannten Verfahren hydriert worden sind.

Zur Adduktierung der Polyaminoamide können eine oder mehrere der Glycidylverbindungen gemäß A) verwendet werden. Es ist auch möglich, andere Epoxide einzusetzen bzw. mitzuverwenden, sofern die Löslichkeit der Addukte in den aromatenfreien Lösungsmitteln nicht beeinträchtigt wird.

Erfindungsgemäß bevorzugt werden die Glycidyläther auf Basis von Bisphenol A und/oder Bisphenol F mit Epoxidwerten zwischen 0,40 - 0,56.

Die untere Grenze der Adduktierung ist abhängig von dem eingesetzten Polyaminoamid und der Glycidylverbindung. Sie kann durch einige orientierende Versuche schnell und einfach durch Überprüfung der Siegelfestigkeit des Endproduktes festgestellt werden. Für die obere Grenze gilt sinngemäß das gleiche; in diesem Fall muß sie unterhalb des Gelierungsbereiches liegen. Erfindungsgemäß bevorzugt wird ein Adduktierungsgrad im Bereich von 0,05 bis 0,30, insbesondere von 0,15 bis 0,25 bei aromatischen und von 0,20 bis 0,25 bei aliphatischen Glycidyläthern.

Der Adduktierungsgrad bezeichnet den Bruchteil der zur vollständigen Umsetzung aller reaktiven Aminwasserstoffatome des Polyaminoamids erforderlichen Epoxidharzmenge, welche mit 1,0 bezeichnet wird.

Das feste Polyamid gemäß C) ist ein Kondensationsprodukt aus dimerer Fettsäure, Ethylendiamin und gegebenenfalls mindestens einem gegebenenfalls substituierten, gegebenenfalls Heteroatome, insbesondere Sauerstoffatome, enthaldenden aliphatischen Diamin und/oder heterocyclischen Diamin und mindestens einer kurzkettigen Monocarbonsäure.

Als Codiamine werden erfindungsgemäß aliphatische Diamine mit 3 - 6 Kohlenstoffatomen in der Hauptkette wie insbesondere 1,6-Diaminohexan und das technische Isomerengemisch von 1,6-Diamino-2,2,4(2,4,4)-trimethylhexan sowie Ätherdiamine wie insbesondere das 1,12-Diamino-4,9-dioxadodekan und heterocyclische Diamine wie insbesondere Piperazin, N-Aminoäthylpiperazin, 1,3-Bis(4-piperidyl)propan 1,6-Diamino-hexan, 3(4),8(9)-Bis(aminomethyl)tricyclo-[5.2.1.0.2,6]-dekan (techn. Isomerengemisch), Piperazin, 1,4-Diaminobutan, 1,9-Diaminononan, 1,12-Diaminododekan, 2-Methyl-1,5-diaminopentan, 2,2-Dimethyl-1,3-diaminopropan, 1,2-Diaminocyclohexan, 3,3'Dimethyl-4,4'-diamino-dicyclo-hexylmethan, 1-Amino-4(gamma-aminopropyl)-cyclohexan, 1-Methyl-4-(1-amino-methylethyl)-cyclohexylamin, 1,10-Diamino-4,7-dioxadekan, 1,14-Diamino-4,11-dioxatetradekan, 1,13-Diamino-4,7,10-trioxa-tridekan), N-Aminoethyl-piperazin, 1,3-Dipiperidylpropan, 1,3-Dipiparazinylpropan, 1,2-Diperazinylethan, Dipiperazinylmethan.

Das Verhältnis von Ethylendiamin zu Co-Diamin kann innerhalb der Grenzen von 1,0 : 0 bis 0,5 : 0,5, vorzugsweise aber von 0,95 : 0,05 bis 0,8 : 0,2 Äquivalenten variiert werden.

Die mitverwendeten kurzkettigen Monocarbonsäuren sind insbesondere geradkettige aliphatische Säuren mit bis zu 4 Kohlenstoffatomen wie Ameisensäure, Essigsäure, Propionsäure, Buttersäure. Sie werden in Mengen von 0,4 bis 0,8, insbesondere von 0,5 bis 0,7 Äquivalenten, bezogen auf Gesamtsäureäquivalente, mitverwendet.

Erfindungsgemäß bevorzugt werden feste Polyamide, welche aus im wesentlichen äquivalenten Mengen von Säuren und Aminen hergestellt wurden, die einen etwa wachsartigen Charakter aufweisen, in kurzkettigen Alkoholen löslich sind und deren Schmelzpunkt (Ring und Kugel-Schmelzpunkt DIN 1995) um 150°C oder darunter liegt.

Zur Erzielung einer optimalen Härtung werden die Komponenten A) : B) in im wesentlichen äquivalenten Mengen, bezogen auf Aminwasserstoffatome und Epoxidgruppen, eingesetzt. Die möglichen Abweichungen mit überschüssigen Mengen einer der Komponenten und die sich daraus ergebenden Eigenschaftsänderungen sind dem Fachmann auf dem vorliegenden Gebiet bekannt und können in diesem Rahmen ebenfalls toleriert werden.

Das Verhältnis der Komponenten A) + B) : C) , welches mitbestimmend für die Höhe der Siegelfestigkeiten ist, wird sowohl durch die Epoxidharz- und die Härterkomponente als auch durch den Aufbau der Komponente C) selbst beeinflußt. Erfindungsgemäß bevorzugt wird ein Verhältnis von A) + B) : C), welches zwischen 9 : 1 bis 1,5 : 1 (Gewichtsteile), insbesondere zwischen 4 : 1 bis 1,5 : 1, liegt.

Die Komponente C) kann als separate Komponente der reaktiven Mischung oder je nach Bedarf ganz oder teilweise einer der Komponenten A) oder B) oder beiden Komponenten zugemischt werden.

Die mitverwendeten Lösungsmittel sind aromatenfrei. Während für die aliphatischen Glycidylverbindungen kurzkettige aliphatische Alkohole wie Äthanol, n-Propanol, iso-Propanol oder deren Mischungen eingesetzt werden, werden für die aromatischen Glycidyläther Mischungen der Alkohole mit Essigsäureäthylester bevorzugt.

Für die Härterkomponente B) sind in der Regel iso-Propanol oder n-Propanol oder Mischungen der kurzkettigen Alkohole wie Äthanol/n-Propanol oder n-Propanol/iso-Propanol bevorzugt.

Die mitverwendbaren Pigmente, Farbstoffe, Netz- und Verlaufsmittel sind die für Druckfarben üblichen und wohl bekannten Produkte.

Mit dem erfindungsgemäßen Verfahren können anorganische und organische Substrate bedruckt bzw. beschichtet werden. Es kommen die in der Druckindustrie üblichen Folien in Frage aus z. B. Polyamiden, Polyestern oder wärmeempfindlichen Folien aus z. B. Polyäthylen und Polypropylen), Co-Extrusionsfolien aus Polyäthylen und Polypropylen, nicht behandelte oder mit Polymeren beschichtete oder mit Nitrocellulose lackierte Zellglasfolien der mit Metallen bedampften Folien, Papier, Kartonagen und gegebenenfalls Polyvinylchlorid bzw. dessen Copolymerisate, sowie Metallfolien wie z. B. Aluminiumfolien. Kombinationen dieser Materialien sind gegebenenfalls auch möglich.

### Herstellung der Formulierungen

#### 1. Epoxidharzformulierungen

In einem Gemisch, bestehend aus 18,0 g Äthanol und 10,0 g Äthylacetat, werden 8,0 g Bisphenol A-Epoxidharz (Tabelle 3, Beispiel 2) und 14,0 g Polyaminoamid (Beispiel 2, Tabelle 2) unter Rühren und leichter Erwärmung gelöst.

Die Lösung ist nach dem Abkühlen gebrauchsfertig (Beispiel 1, Tabelle 5).

#### 2. Härterformulierungen

In einem Gemisch, bestehend aus 29,0 g Äthanol und 23,0 g n-Propanol, werden 32,4 g Polyaminoamid (Beispiel 1, Tabelle 1) und 13,0 g Polyaminoamid (Beispiel 2, Tabelle 2) unter Rühren und leichter Erwärmung gelöst. Nach dem Abkühlen werden 2,6 g Bisphenol-A-Epoxidharz (Tabelle 3, Beispiel 2) zugegeben und sofort gerührt. Die anfangs leicht getrübte Lösung wird dann auf ca. 60°C erhitzt und 5 Std bei dieser Temperatur weitergerührt.

Die nun klare Lösung ist nach dem Abkühlen gebrauchsfertig (Beispiel 1, Tabelle 4).

Gebrauchsfertige, im richtigen Mischungsverhältnis stehende Formulierungen erhält man, wenn die in der Tabelle 6 angegebenen Mengen zusammengegeben und gut gemischt werden.

In gleicher Weise werden sämtliche in den Tabellen 4 und 5 aufgeführten Härter- und Harzformulierungen sowie die in Tabelle 6 aufgeführten Mischungen hergestellt.

## Herstellung der Druckfarben

Nach der Fertigstellung werden die Härterlösungen mit den in der Druckfarbenindustrie üblichen Disperigiergeräten pigmentiert. Hierfür können organische und anorganische Pigmente sowie lösliche Farbstoffe in den auf diesem Gebiet üblichen Mengen Anwendung finden. Nach dem Mischen der Härter- und Epoxidharzkomponenten im richtigen Mischungsverhältnis (siehe Tabelle 6) werden die fertigen Druckfarben je nach Erfordernissen des jeweiligen Druckverfahrens auf die richtige Druckviskosität verdünnt.

Eine Auswahl der so hergestellten Druckfarben wurde mit einer handelsüblichen Druckmaschine von Rolle auf Rolle auf Polyäthylen und Aluminiumfolie gedruckt. Die Drucke waren sofort nach Abdunsten der Lösungsmittel physikalisch trocken, so daß keinerlei Kleben oder Abklatschen der Farben auf die Rückseite der aufgerollten Folie beobachtet wurde. Nach einer Standzeit von 7 Tagen bei Raumtemperatur wurden die Drucke einem ausführlichen, in der Druckfarbenindustrie üblichen Test unterzogen. Die Werte für die thermischen Beständigkeitseigenschaften sind in der Tabelle 7 aufgeführt.

## Prüfung der Siegelfestigkeit

Ca. 4 cm breite Streifen von Drucken auf Aluminiumfolie werden Druck gegen Druck gefaltet und unter einer Belastung von 1 kg/cm³ Druck und 1 sec Siegeldauer bei steigenden Temperaturen von 80 - 250°C in einem Brugger-Siegelautomaten gegeneinander gesiegelt. Nach dem Abkühlen wird entfaltet und beurteilt.

## Bewertung der Testmethode

0 - absolut einwandfrei
1 - Knistern*, keine Filmbeschädigung
2 - Blockung, <5 % des Films beschädigt
3 - Blockung, <10 % des Films beschädigt
4 - Blockung, <25 % des Films beschädigt
5 - Blockung, >25 % des Films beschädigt

*) Knistern: Geräuschentwicklung beim Trennen der Folien aufgrund Adhäsion der Folien. Ursache unbekannt, aber keine Blockung des Films.

Wie die ermittelten Werte zeigen, wurden bei Verwendung der erfindungsgemäßen Kunstharzmischungen als Druckfarbenbindemittel deutlich höhere Wärmebeständigkeiten (Siegelfestigkeiten) erhalten als bei den bisher bekannten zweikomponentigen Druckfarben auf Epoxidharzbasis.

**Tabelle 1** (Komponenten gemäß Anspruch 1, B)

| Bei-spiel Nr. | Dimeris. Gramm | Fettsäure Äquivalente | Äthylendiamin Gramm | Äquiv. x 1,45 | Co-Diamin | Gramm | Äquiv. x 1m45 | Aminzahl | R + B-Erwei-chungspunkt |
|---|---|---|---|---|---|---|---|---|---|
| 1 | 400 | 1,0 | 55,14 | 0,9 x 1,45 | IPD[1] | 17,19 | 0,1 x 1,45 | 51 | 102°C |
| 2 | 400 | 1,0 | 49,02 | 0,8 x 1,45 | IPD | 34,38 | 0,2 x 1,45 | 57 | 74°C |
| 3 | 400 | 1,0 | 30,64 | 0,5 x 1,45 | TMD[2] | 80,47 | 0,5 x 1,45 | 48 | 63°C |
| 4 | 400 | 1,0 | 30,64 | 0,5 x 1,45 | HDA[3] | 58,70 | 0,5 x 1,45 | 46 | 67°C |
| 5 | 400 | 1,0 | 30,64 | 0,5 x 1,45 | 1,2PrDA[4] | 37,71 | 0,5 x 1,45 | 44 | 80°C |
| 6 | 400 | 1,0 | 49,02 | 0,8 x 1,45 | BDA[5] | 40,10 | 0,2 x 1,45 | 52 | 78°C |
| 7* | 400 | 1,0 | 43,35 | 0,9 x 1,14 | IPD | 13,61 | 0,1 x 1,14 | 21 | 105°C |

Legende:
1 IPD = 1-Amino-3,5,5-trimethyl-3-aminomethyl-cyclohexan
2 THD = Gemisch aus 2,2,4-Trimethyl-1,6-Diamino-hexan und 4,4,2-Trimethyl-1,6-Diamino-hexan
3 HDA = 1,6-Diamino-hexan
4 1,2PrDA = 1,2-Diamina-propan
5 BDA = 1,12-Diamino-4,9-dioxa-dodecan
*) Vergleichsbeispiel

**Tabelle 2** (gemäß Komponenten C)

| Nr. | Dimere Fettsäure Gramm Äquiv. | | Co-Karbonsäure - | Gramm Äquiv. | | EDA Gramm Äquiv. - | | Co-Diamin | Gramm Äquiv. | | AZ | SZ | Pa.s 160°C | R+B °C |
|---|---|---|---|---|---|---|---|---|---|---|---|---|---|---|
| 1 | 400 | 0,5 | Ameisensäure | 78,80 | 0,5 | 84,50 | 1,0 | - | - | - | 6,5 | 2,8 | 0,17 | 77 |
| 2 | 320 | 0,5 | Essigsäure | 67,43 | 0,5 | 67,60 | 1,0 | - | - | - | 4,1 | 3,8 | 0,10 | 145 |
| 3 | 350 | 0,4 | ,, | 111,00 | 0,6 | 92,40 | 1,0 | - | - | - | 4,7 | 5,4 | 0,14 | 146 |
| 4 | 250 | 0,3 | ,, | 122,90 | 0,7 | 88,00 | 1,0 | - | - | - | 2,4 | 5,1 | 0,10 | 148 |
| 5 | 300 | 0,5 | Propionsäure | 77,96 | 0,5 | 31,68 | 0,5 | HDA | 61,24 | 0,5 | 3,5 | 1,3 | 0,25 | 120 |
| 6 | 300 | 0,5 | ,, | 77,96 | 0,5 | 31,68 | 0,5 | TCD[6] | 102,04 | 0,5 | 2,1 | 0,7 | 0,25 | 120 |
| 7 | 300 | 0,5 | ,, | 77,96 | 0,5 | 31,68 | 0,5 | BDA[7] | 103,65 | 0,5 | 0,7 | 1,3 | 0,10 | 116 |
| 8 | 300 | 0,5 | ,, | 77,96 | 0,5 | 31,68 | 0,5 | TMD | 83,22 | 0,5 | 3,0 | 1,4 | 0,12 | 120 |
| 9 | 300 | 0,5 | ,, | 77,96 | 0,5 | 31,68 | 0,5 | Pip[8] | 45,27 | 0,5 | 3,7 | 1,2 | 0,10 | 120 |
| 10 | 300 | 0,5 | Buttersäure | 92,80 | 0,5 | 31,68 | 0,5 | IPD | 88,87 | 0,5 | 4,3 | 0,7 | 0,20 | 108 |
| 11 | 300 | 0,5 | ,, | 92,80 | 0,5 | 31,68 | 0,5 | HDA | 61,24 | 0,5 | 3,4 | 1,0 | 0,10 | 107 |
| 12 | 300 | 0,5 | ,, | 92,80 | 0,5 | 31,68 | 0,5 | TCD | 102,04 | 0,5 | 2,3 | 0,9 | 0,20 | 120 |
| 13 | 300 | 0,5 | ,, | 92,80 | 0,5 | 31,68 | 0,5 | BDA | 103,65 | 0,5 | 2,2 | 1,0 | 0,10 | 125 |
| 14 | 300 | 0,5 | ,, | 92,80 | 0,5 | 31,68 | 0,5 | TMD | 83,22 | 0,5 | 4,8 | 0,7 | 0,10 | 130 |
| 15 | 300 | 0,5 | ,, | 92,80 | 0,5 | 31,68 | 0,5 | Pip | 45,27 | 0,5 | 3,0 | 1,1 | 0,10 | 126 |
| 16 | 300 | 0,5 | ,, | 92,80 | 0,5 | 31,68 | 0,5 | 1,2PrDA | 39,00 | 0,5 | 4,2 | 4,4 | 0,10 | 130 |
| 17 | 300 | 0,5 | Propionsäure | 77,96 | 0,5 | 31,68 | 0,5 | ,, | 39,00 | 0,5 | 5,2 | 4,8 | 0,15 | 128 |
| 18 | 300 | 0,5 | ,, | 77,96 | 0,5 | 50,70 | 0,8 | HDA | 24,50 | 0,2 | 2,9 | 1,7 | 0,14 | 150 |
| 19 | 300 | 0,5 | ,, | 77,96 | 0,5 | 50,70 | 0,8 | IPD | 35,55 | 0,2 | 3,3 | 2,5 | 0,14 | 149 |
| 20 | 300 | 0,5 | ,, | 77,96 | 0,5 | 50,70 | 0,8 | TCD | 40,82 | 0,2 | 3,3 | 2,7 | 0,15 | 149 |
| 21 | 300 | 0,5 | ,, | 77,96 | 0,5 | 50,70 | 0,8 | BDA | 41,50 | 0,2 | 2,1 | 1,5 | 0,13 | 150 |
| 22 | 300 | 0,5 | ,, | 77,96 | 0,5 | 50,70 | 0,8 | TMD | 33,30 | 0,2 | 3,5 | 2,6 | 0,14 | 150 |
| 23 | 300 | 0,5 | ,, | 77,96 | 0,5 | 50,70 | 0,8 | 1,2PrDA | 15,60 | 0,2 | 4,7 | 2,7 | 0,14 | 152 |
| 24 | 300 | 0,5 | ,, | 77,96 | 0,5 | 50,70 | 0,8 | Pip | 18,11 | 0,2 | 2,6 | 1,5 | 0,15 | 150 |
| 25 | 250 | 0,6 | ,, | 43,20 | 0,4 | 22,00 | 0,5 | 1,2PrDA | 27,00 | 0,5 | 4,9 | 7,2 | 0,19 | 125 |
| 26 | 250 | 0,4 | ,, | 97,50 | 0,6 | 33,00 | 0,5 | ,, | 40,60 | 0,5 | 8,6 | 7,7 | 0,11 | 132 |
| 27 | 250 | 0,3 | ,, | 151,60 | 0,7 | 44,00 | 0,5 | ,, | 54,20 | 0,5 | 9,5 | 8,1 | 0,10 | 132 |
| 28* | 400 | 0,725 | Essigsäure | 31,97 | 0,275 | 34,97 | 0,6 | ,, | 28,70 | 0,4 | 4,3 | 5,1 | 0,52 | 127 |

Legende:
6 TCD = 3(4),8(9)-Bis(aminomethyl)tricyclo-[5.2.1.0$^{2,6}$]-dekan (techn. Isomerengemisch)
7 BDA = 1,12-Diamino-4,9-dioxa-dodekan
8 Pip = Piperazin

*) Vergleichsbeispiel

**Tabelle 3** (Komponenten nach A)

| Nr. | Glycidylverbindungen auf Basis | Epoxidwert |
|---|---|---|
| 1 | Bisphenol A | 0,42 |
| 2 | Bisphenol A | 0,54 |
| 3 | Bisphenol F | 0,54 |
| 4 | Glycerin | 0,63 |
| 5 | Hexandiol | 0,61 |
| 6 | Diglycerin | 0,66 |
| 7 | Neopentylglykol | 0,67 |

Bisphenol A = 4 4'-Dihydroxydiphenylpropan-(2,2)
Bisphenol F = 4 4'-Dihydroxydiphenylmethan

**Tabelle 4** Härterformulierungen

| Nr. | Nr. Tab. 1 | Menge g | Nr. Tab. 3 | Menge g | Voradduktierungsgrad in Äquiv. | Nr. Tab. 2 | Menge g | Lösungsmittel g | | |
|---|---|---|---|---|---|---|---|---|---|---|
| | | | | | | | | Äthanol | Isopropanol | n-Propanol |
| 1 | 1 | 32,4 | 2 | 2,6 | 0,25 | 2 | 13,0 | 29,0 | - | 23,0 |
| 2 | 2 | 32,4 | 2 | 2,6 | 0,25 | 1 | 13,0 | 29,0 | - | 23,0 |
| 3 | 3 | 32,4 | 2 | 2,6 | 0,25 | 2 | 13,0 | 29,0 | - | 23,0 |
| 4 | 4 | 32,4 | 2 | 2,6 | 0,25 | 3 | 13,0 | 29,0 | - | 23,0 |
| 5 | 5 | 32,4 | 2 | 2,6 | 0,25 | 4 | 13,0 | 29,0 | - | 23,0 |
| 6 | 6 | 32,4 | 2 | 2,6 | 0,25 | 2 | 13,0 | 29,0 | - | 23,0 |
| 7 | 1 | 35,4 | 2 | 2,6 | 0,22 | 25 | 10,0 | - | 52,0 | - |
| 8 | 1 | 35,4 | 2 | 2,6 | 0,22 | 26 | 10,0 | - | 52,0 | - |
| 9 | 1 | 35,4 | 2 | 2,6 | 0,22 | 27 | 10,0 | - | 52,0 | - |
| 10 | 1 | 36,5 | 2 | 2,5 | 0,22 | 5 | 9,0 | 35,0 | - | 17,0 |
| 11 | 1 | 36,5 | 2 | 2,5 | 0,22 | 7 | 9,0 | 35,0 | - | 17,0 |
| 12 | 1 | 36,5 | 2 | 2,5 | 0,22 | 9 | 9,0 | 35,0 | - | 17,0 |
| 13 | 2 | 36,5 | 2 | 2,5 | 0,22 | 10 | 9,0 | 35,0 | - | 17,0 |
| 14 | 1 | 36,5 | 2 | 2,5 | 0,22 | 12 | 9,0 | 35,0 | - | 17,0 |
| 15 | 2 | 36,5 | 2 | 2,5 | 0,22 | 14 | 9,0 | 35,0 | - | 17,0 |
| 16 | 4 | 36,5 | 2 | 2,5 | 0,22 | 17 | 9,0 | 35,0 | - | 17,0 |
| 17 | 1 | 32,4 | 2 | 2,6 | 0,25 | 18 | 13,0 | 29,0 | - | 23,0 |
| 18 | 1 | 32,4 | 2 | 2,6 | 0,25 | 21 | 13,0 | 29,0 | - | 23,0 |
| 19 | 1 | 32,4 | 2 | 2,6 | 0,25 | 23 | 13,0 | 29,0 | - | 23,0 |
| 20 | 1 | 35,4 | 1 | 2,6 | 0,18 | 2 | 10,0 | - | 52,0 | - |
| 21 | 1 | 35,4 | 3 | 2,6 | 0,22 | 2 | 10,0 | - | 52,0 | - |
| 22 | 1 | 34,0 | 4 | 2,0 | 0,21 | 2 | 9,0 | - | 55,0 | - |
| 23 | 1 | 34,0 | 5 | 2,0 | 0,21 | 2 | 9,0 | - | 55,0 | - |
| 24 | 1 | 34,5 | 6 | 2,0 | 0,22 | 2 | 9,0 | - | 54,5 | - |
| 25 | 1 | 34,5 | 7 | 2,0 | 0,22 | 2 | 9,0 | - | 54,5 | - |
| 26 | 1 | 35,4 | 2 | 2,6 | 0,22 | 2 | 28,0 | 42,0 | - | 42,0 |
| 27 | 1 | 35,4 | 2 | 2,6 | 0,22 | - | - | 30,0 | - | 32,0 |
| 28 | 1 | 35,4 | 2 | 1,2 | 0,11 | 2 | 10,0 | - | 53,4 | - |
| 29 | 1 | 35,4 | 2 | 3,1 | 0,29 | 2 | 10,0 | - | 51,5 | - |
| 30 | 1 | 35,4 · | 2 | 2,6 | 0,22 | 2 | 2,0 | - | 60,0 | - |
| 31 | 1 | 35,4 | 2 | 2,6 | 0,22 | 2 | 2,0 | - | 60,0 | - |
| 32* | 1 | 35,4 | - | - | - | 2 | 10,0 | - | 54,6 | - |
| 33* | 1 | 35,4 | 2 | 2,6 | 0,22 | - | - | - | 62,0 | - |
| 34* | 1 | 35,4 | 2 | 2,6 | 0,22 | 2 | 37,0 | 40,0 | - | 35,0 |
| 35* | 7 | 24,1 | 2 | 0,9 | 0,27 | 2 | 3,0 | 17,0 | - | 15,0 |
| 36* | 1 | 35,4 | 2 | 2,6 | 0,22 | 28 | 10,0 | - | 52,0 | - |

*) Nr. 32 - 36 Vergleichsbeispiele

**Tabelle 5** Epoxidharzformulierungen

| Nr. | Nr. Tabelle 3 | Menge g | Nr. Tabelle 2 | Menge g | Lösungsmittel g | | |
|---|---|---|---|---|---|---|---|
| | | | | | Äthanol | n-Propanol | Äthylacetat |
| 1 | 2 | 8,0 | 2 | 14,0 | 18,0 | - | 10,0 |
| 2 | 2 | 8,0 | 1 | 14,0 | 18,0 | - | 10,0 |
| 3 | 2 | 8,0 | 2 | 14,0 | 18,0 | - | 10,0 |
| 4 | 2 | 8,0 | 3 | 14,0 | 18,0 | - | 10,0 |
| 5 | 2 | 8,0 | 4 | 14,0 | 18,0 | - | 10,0 |
| 6 | 2 | 8,0 | 2 | 14,0 | 18,0 | - | 10,0 |
| 7 | 2 | 9,0 | 25 | 14,0 | 14,0 | - | 13,0 |
| 8 | 2 | 9,0 | 26 | 14,0 | 14,0 | - | 13,0 |
| 9 | 2 | 9,0 | 27 | 14,0 | 14,0 | - | 13,0 |
| 10 | 2 | 9,0 | 5 | 15,0 | 13,0 | - | 13,0 |
| 11 | 2 | 9,0 | 7 | 15,0 | 13,0 | - | 13,0 |
| 12 | 2 | 9,0 | 9 | 15,0 | 13,0 | - | 13,0 |
| 13 | 2 | 9,0 | 10 | 15,0 | 13,0 | - | 13,0 |
| 14 | 2 | 9,0 | 12 | 15,0 | 13,0 | - | 13,0 |
| 15 | 2 | 9,0 | 14 | 15,0 | 13,0 | - | 13,0 |
| 16 | 2 | 9,0 | 17 | 15,0 | 13,0 | - | 13,0 |
| 17 | 2 | 8,0 | 18 | 14,0 | 18,0 | - | 10,0 |
| 18 | 2 | 8,0 | 21 | 14,0 | - | 18,0 | 10,0 |
| 19 | 2 | 8,0 | 23 | 14,0 | - | 18,0 | 10,0 |
| 20 | 1 | 11,5 | 2 | 13,0 | - | 18,0 | 17,5 |
| 21 | 3 | 9,0 | 2 | 13,0 | 18,0 | - | 10,0 |
| 22 | 4 | 7,5 | 2 | 13,0 | - | 29,5 | - |
| 23 | 5 | 7,5 | 2 | 13,0 | - | 29,5 | - |
| 24 | 6 | 7,0 | 2 | 13,0 | - | 30,0 | - |
| 25 | 7 | 7,0 | 2 | 13,0 | - | 30,0 | - |
| 26 | 2 | 9,0 | - | - | 6,0 | - | 5,0 |
| 27 | 2 | 9,0 | 2 | 28,0 | 33,0 | - | 30,0 |
| 28 | 2 | 10,4 | 2 | 13,0 | - | 16,6 | 10,0 |
| 29 | 2 | 8,5 | 2 | 13,0 | - | 18,5 | 10,0 |
| 30 | 2 | 9,0 | 2 | 10,0 | 16,0 | - | 15,0 |
| 31 | 2 | 9,0 | 2 | 3,5 | 25,0 | - | 12,5 |
| 32* | 2 | 11,6 | 2 | 14,0 | 20,0 | - | 14,4 |
| 33* | 2 | 9,0 | - | - | 21,0 | - | 20,0 |
| 34* | 2 | 9,0 | 2 | 35,5 | 35,5 | - | 20,0 |
| 35* | 2 | 2,5 | 2 | 11,0 | 15,0 | - | 11,5 |
| 36* | 2 | 9,0 | - | 14,0 | 14,0 | - | 13,0 |

*) Nr. 32 - 36 = Vergleichsbeispiele

**Tabelle 6** Mischungsbeispiele

| Nr. | Nr. Tab. 4 | Menge g | Nr. Tab. 5 | Menge g | Verhältnis der Komponenten A+B : C | |
|---|---|---|---|---|---|---|
| 1 | 1 | 100 | 1 | 50 | 1,6 | 1 |
| 2 | 2 | 100 | 2 | 50 | 1,6 | 1 |
| 3 | 3 | 100 | 3 | 50 | 1,6 | 1 |
| 4 | 4 | 100 | 4 | 50 | 1,6 | 1 |
| 5 | 5 | 100 | 5 | 50 | 1,6 | 1 |
| 6 | 6 | 100 | 6 | 50 | 1,6 | 1 |
| 7 | 7 | 100 | 7 | 50 | 2,0 | 1 |
| 8 | 8 | 100 | 8 | 50 | 2,0 | 1 |
| 9 | 9 | 100 | 9 | 50 | 2,0 | 1 |
| 10 | 10 | 100 | 10 | 50 | 2,0 | 1 |
| 11 | 11 | 100 | 11 | 50 | 2,0 | 1 |
| 12 | 12 | 100 | 12 | 50 | 2,0 | 1 |
| 13 | 13 | 100 | 13 | 50 | 2,0 | 1 |
| 14 | 14 | 100 | 14 | 50 | 2,0 | 1 |
| 15 | 15 | 100 | 15 | 50 | 2,0 | 1 |
| 16 | 16 | 100 | 16 | 50 | 2,0 | 1 |
| 17 | 17 | 100 | 17 | 50 | 1,6 | 1 |
| 18 | 18 | 100 | 18 | 50 | 1,6 | 1 |
| 19 | 19 | 100 | 19 | 50 | 1,6 | 1 |
| 20 | 20 | 100 | 20 | 60 | 2,2 | 1 |
| 21 | 21 | 100 | 21 | 50 | 2,0 | 1 |
| 22 | 22 | 100 | 22 | 50 | 2,0 | 1 |
| 23 | 23 | 100 | 23 | 50 | 2,0 | 1 |
| 24 | 24 | 100 | 24 | 50 | 2,0 | 1 |
| 25 | 25 | 100 | 25 | 50 | 2,0 | 1 |
| 26 | 26 | 100 | 26 | 20 | 1,7 | 1 |
| 27 | 27 | 100 | 27 | 100 | 1,7 | 1 |
| 28 | 28 | 100 | 28 | 50 | 2,0 | 1 |
| 29 | 29 | 100 | 29 | 50 | 2,0 | 1 |
| 30 | 30 | 100 | 30 | 50 | 3,9 | 1 |
| 31 | 31 | 100 | 31 | 50 | 8,6 | 1 |
| 32* | 32 | 100 | 32 | 60 | 2,0 | 1 |
| 33* | 33 | 100 | 33 | 50 | - | - |
| 34* | 34 | 150 | 34 | 100 | 0,7 | 1 |
| 35* | 35 | 60 | 35 | 40 | 2 | 1 |
| 36* | 36 | 100 | 36 | 50 | 2 | 1 |

*) Nr. 32 - 36 = Vergleichsbeispiele

**Tabelle 7**

| Nr. Tab. 6 Siegeltemp. | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|
| 60°C | 0 | 0 | 0 | 0 | 0 | 0 | 0 | 0 | 0 | 0 | 0 | 0 | 0 | 0 | 0 | 0 | 0 | 0 | 0 | 0 | 0 |
| 80°C | 0 | 0 | 0 | 0 | 0 | 0 | 0 | 0 | 0 | 0 | 0 | 0 | 0 | 0 | 0 | 0 | 0 | 0 | 0 | 0 | 0 |
| 90°C | 0 | 0 | 0 | 0 | 0 | 0 | 0 | 0 | 0 | 0 | 0 | 0 | 1 | 0 | 0 | 0 | 0 | 0 | 0 | 0 | 0 |
| 100°C | 0 | 0 | 0 | 0 | 0 | 0 | 1 | 0 | 0 | 1 | 0 | 0 | 0 | 0 | 1 | 1 | 0 | 0 | 0 | 0 | 0 |
| 110°C | 0 | 0 | 0 | 0 | 0 | 0 | 0 | 0 | 0 | 0 | 0 | 0 | 1 | 0 | 0 | 0 | 0 | 1 | 0 | 0 | 0 |
| 120°C | 0 | 1 | 0 | 1 | 0 | 0 | 1 | 0 | 0 | 1 | 0 | 0 | 0 | 1 | 1 | 1 | 1 | 0 | 0 | 0 | 1 |
| 130°C | 0 | 0 | 0 | 0 | 1 | 1 | 0 | 0 | 0 | 1 | 0 | 0 | 1 | 0 | 1 | 0 | 1 | 0 | 0 | 1 | 0 |
| 140°C | 1 | 1 | 0 | 1 | 1 | 1 | 1 | 0 | 0 | 1 | 1 | 0 | 1 | 0 | 1 | 1 | 0 | 0 | 0 | 1 | 1 |
| 150°C | 1 | 0 | 0 | 0 | 0 | 0 | 0 | 0 | 0 | 0 | 1 | 0 | 1 | 1 | 0 | 1 | 1 | 1 | 0 | 1 | 1 |
| 160°C | 0 | 0 | 0 | 1 | 1 | 0 | 0 | 0 | 0 | 0 | 0 | 0 | 1 | 0 | 1 | 0 | 0 | 0 | 0 | 1 | 0 |
| 170°C | 1 | 0 | 0 | 1 | 0 | 1 | 0 | 0 | 0 | 0 | 0 | 0 | 0 | 0 | 0 | 0 | 0 | 0 | 0 | 1 | 0 |
| 180°C | 0 | 0 | 0 | 1 | 0 | 1 | 0 | 1 | 0 | 0 | 1 | 0 | 0 | 0 | 0 | 0 | 0 | 0 | 0 | 0 | 0 |
| 190°C | 0 | 0 | 0 | 1 | 1 | 1 | 0 | 0 | 1 | 0 | 0 | 0 | 0 | 0 | 0 | 1 | 0 | 0 | 0 | 0 | 0 |
| 200°C | 1 | 0 | 0 | 1 | 0 | 0 | 1 | 0 | 0 | 0 | 0 | 0 | 1 | 0 | 0 | 0 | 0 | 0 | 0 | 0 | 0 |
| 225°C | 0 | 0 | 0 | 1 | 0 | 0 | 0 | 0 | 0 | 0 | 0 | 0 | 0 | 0 | 0 | 0 | 0 | 0 | 1 | 0 | 1 |
| 250°C | 0 | 0 | 0 | 1 | 0 | 1 | 1 | 1 | 1 | 0 | 0 | 0 | 1 | 0 | 0 | 1 | 0 | 1 | 0 | 1 | 1 |

**Tabelle 7**  - Fortsetzung -

| Nr. Tab. 6 Siegeltemp. | 22 | 23 | 24 | 25 | 26 | 27 | 28 | 29 | 30 | 31 | 32* | 33* | 34* | 35* | 36* |
|---|---|---|---|---|---|---|---|---|---|---|---|---|---|---|---|
| 60°C | 0 | 0 | 0 | 0 | 0 | 0 | 0 | 0 | 0 | 0 | 0 | 0 | 0 | 0 | 0 |
| 80°C | 0 | 0 | 0 | 0 | 0 | 0 | 0 | 0 | 0 | 0 | 0 | 0 | 0 | 0 | 0 |
| 90°C | 0 | 0 | 0 | 0 | 0 | 0 | 0 | 0 | 0 | 0 | 0 | 0 | 0 | 0 | 0 |
| 100°C | 0 | 0 | 0 | 0 | 0 | 0 | 0 | 0 | 0 | 0 | 1 | 0 | 0 | 1 | 1 |
| 110°C | 0 | 1 | 0 | 1 | 0 | 0 | 0 | 0 | 0 | 1 | 2 | 1 | 1 | 2 - 3 | 0 |
| 120°C | 0 | 2 | 1 | 0 | 1 | 0 | 1 | 0 | 1 | 1 | 2 | 2 | 0 | 2 - 3 | 2 |
| 130°C | 1 | 1 | 0 | 1 | 1 | 0 | 2 | 0 | 1 | 2 | 2 - 3 | 3 | 2 | 3 - 4 | 2 - 3 |
| 140°C | 0 | 2 | 1 | 1 | 1 | 1 | 1 | 1 | 1 | 2 | 2 - 3 | 2 - 3 | 2 - 3 | 3 - 4 | 3 - 4 |
| 150°C | 1 | 2 | 0 | 1 | 1 | 1 | 0 | 1 | 0 | 1 | 3 | 3 | 3 | 3 - 4 | 3 - 4 |
| 160°C | 0 | 1 | 0 | 1 | 0 | 0 | 1 | 0 | 1 | 1 | 2 | 3 | 2 - 3 | 3 | 3 |
| 170°C | 0 | 0 | 0 | 0 | 0 | 0 | 0 | 0 | 0 | 1 | 2 | 3 - 4 | 3 - 4 | 3 | 3 |
| 180°C | 0 | 1 | 0 | 1 | 0 | 0 | 1 | 0 | 0 | 1 | 2 - 3 | 3 - 4 | 3 | 3 - 4 | 3 - 4 |
| 190°C | 0 | 0 | 1 | 0 | 0 | 0 | 1 | 0 | 0 | 1 - 2 | 3 | 3 | 3 | 2 - 3 | 3 - 4 |
| 200°C | 0 | 0 | 1 | 0 | 0 | 0 | 0 | 1 | 1 | 1 - 2 | 3 | 3 - 4 | 4 | 2 - 3 | 4 |
| 225°C | 0 | 0 | 0 | 0 | 0 | 0 | 0 | 0 | 1 | 2 | 3 - 4 | 3 - 4 | 4 | 3 | 3 - 4 |
| 250°C | 0 | 1 | 0 | 0 | 0 | 0 | 1 | 0 | 1 | 2 | 4 | 3 - 4 | 4 - 5 | 3 - 4 | 4 |

*) Nr. 32 - 36 = Vergleichsbeispiele

## Patentansprüche

1. Verwendung von härtbaren Kunstharzmischungen, die nach dem Abdunsten des Lösungsmittels physikalisch trockene und klare Filme ergeben und die bei Raumtemperatur bzw. wenig erhöhter Temperatur aushärten, als Bindemittel für Druckfarben und für Überdrucklacke, dadurch gekennzeichnet, daß die Kunstharzmischungen bestehen aus

A) Glycidylverbindungen mit mehr als einer Epoxidgruppe pro Molekül und Epoxidwerven von 0,4 bis 0,7 und

B) mindestens einer festen Kunstharzkomponente mit freien Aminogruppen, bestehend aus einem Addukt aus

1. einem Überschuß eines Polyaminoamids aus

a) dimerer Fettsäure und

b) Äthylendiamin und

c) mindestens einem gegebenenfalls substituierten, gegebenenfalls Heteroatome enthaltenden aliphatischen und/oder cycloaliphatischen Diamin,

wobei das Verhältnis von b) : c) zwischen 0,95 : 0,05 bis 0,5 : 0,5 liegen kann und

2. einer Glycidylverbindung mit mehr als einer Epoxidgruppe pro Molekül und Epoxidwerten von 0,4 - 0,7,

worin bis zu 0,30 Aminwasserstoffäquivalente des Polyaminoamids gemäß 1. durch die Glycidylverbindungen gemäß 2. voradduktiert sind und

C) einem festen Polyamid, bestehend aus

a) dimerer Fettsäure und

b) Äthylendiamin und gegebenenfalls

c) mindestens einem gegebenenfalls substituierten, gegebenenfalls Heteroatome enthaltenden aliphatischen und/oder heterocyclischen Diamin

worin das Verhältnis von b) : c) zwischen 1,0 : 0 bis 0,5 : 0,5 Äquivalenten variiert werden kann, und

d) mindestens einer kurzen geradkettigen aliphatischen Monocarbonsäure in Mengen von 0,4 bis 0,8 Äquivalenten, bezogen auf Gesamtsäureäquivalente,

wobei im wesentlichen äquivalente Mengen der Säure- und Aminkomponenten eingesetzt werden und

worin A) : B) in im wesentlichen äquivalenten Mengen, bezogen auf Epoxidgruppen und Aminwasserstoffatome, und worin A) + B) : C) im Verhältnis von 9 : 1 bis 1,5 : 1 (Gewichtsteile) vorliegen können, und

D) aromatenfreien Lösungsmitteln und gegebenenfalls

E) Pigmenten, Farbstoffen, Netz- und Verlaufsmitteln.

2. Verwendung von härtbaren Kunstharzmischungen gemäß Anspruch 1, dadurch gekennzeichnet, daß als Glycidylverbindungen gemäß A) flüssige aromatische Glycidyläther auf Basis von Bisphenol A und/oder Bisphenol F mit Epoxidwerten von 0,4 bis 0,56 und flüssige aliphatische Glycidyläther auf Basis von Neopentylglykol, Glycerin, Hexandiol und Diglycerin mit Epoxidwerten von 0,6 bis 0,7 verwendet werden.

3. Verwendung von härtbaren Kunstharzmischungen gemäß den Ansprüchen 1 und 2, dadurch gekennzeichnet, daß das Polyaminoamid gemäß B) 1. ein festes Polyaminoamid mit Aminzahlen von ca. 30 - 60 ist.

4. Verwendung von härtbaren Kunstharzmischungen gemäß Anspruch 3, dadurch gekennzeichnet, daß als Co-Diamine gemäß B) 1. c) 1-Amino-3-aminomethyl-3,5,5-trimethyl-cyclohexan, 1,2-Diamino-propan, 1,6-Diamino-2,2,4(2,4,4)-trimethylhexan, 1,12-Diamino-4,9-dioxa-dodecan, 1,6-Diamino-hexan, 3(4),8(9)-Bis(aminomethyl)-tricyclo-[5.2.1.0$^{2,6}$]-dekan (techn. Isomerengemisch), Piperazin eingesetzt werden.

5. Verwendung von härtbaren Kunstharzmischungen gemäß den Ansprüchen 1 bis 4, dadurch gekennzeichnet, daß 0,05 bis 0,30 Aminwasserstoffäquivalente des Polyaminoamids gemäß B) 1. mit einem Glycidyläther gemäß B) 2. voradduktiert werden.

6. Verwendung von härtbaren Kunstharzmischungen gemäß den Ansprüchen 1 bis 5, dadurch gekennzeichnet, daß als Glycidyl-Verbindung gemäß B) 2. flüssige aromatische Glycidyläther auf Basis von Bisphenol A und/oder Bisphenol F mit Epoxidwerten von 0,40 - 0,56 in Mengen von 0,05 bis 0,30 Äquivalenten verwendet werden.

7. Verwendung von härtbaren Kunstharzmischungen gemäß den Ansprüchen 1 bis 6, dadurch gekennzeichnet, daß als Glycidyl-verbindung gemäß B) 2. flüssige aliphatische Glycidyläther auf Basis von Neopentylglykol, Glycerin, Hexandiol, Diglycerin mit Epoxidwerten von 0,6 - 0,7 in Mengen von 0,05 - 0,25 Äquivalenten verwendet werden.

8.Verwendung von härtbaren Kunstharzmischungen gemäß den Ansprüchen 1 - 7, dadurch gekennzeichnet, daß als Polyamide genäß C) feste wachsartige Polyamide mit Ring- und Kugel-Schmelzpunkten ≤ 150°C verwendet werden, wobei als Co-Diamin gemäß C) c) 1,6-Diaminohexan, 1,6-Diamino-2,2,4(2,4,4)-trimethyl-hexan, 1,13-Diamino-4,10-dioxa-tridecan, Piperazin, N-Amino-äthyl-piperazin, 1,3-Bis(4-piperidyl)-propan, 3(4),8(9)-Bis(aminomethyl)-tricyclo-[5.2.1.0$^{2,6}$]-dekan (techn. Isomerengemisch) und als Monocarbonsäure gemäß C) d) Essigsäure, Propionsäure, Buttersäure, verwendet wird.

9. Verfahren zum Bedrucken von Oberflächen, dadurch gekennzeichnet, daß als Bindmittel Kunstharzmischungen gemäß den Ansprüchen 1 - 8 verwendet werden.

10. Mittel für das Verfahren zum Bedrucken von Oberflächen, dadurch gekennzeichnet, daß als Bindemittel Kunstharzmischungen gemäß den Ansprüchen 1 - 8 verwendet werden.

## Claims

1. Use, as binders for printing inks and for overprinting varnishes, of hardenable synthetic resin mixtures that when the solvent has evaporated off produce physically dry and clear films and that harden at room temperature or slightly elevated temperature, characterised in that the synthetic resin mixtures consist of

A) glycidyl compounds having more than one epoxy group per molecule and epoxy values of from 0.4 to 0.7 and

B) at least one solid synthetic resin component having free amino groups and consisting of an adduct formed from

1. an excess of a polyaminoamide formed from
a) dimeric fatty acid and
b) ethylenediamine and
c) at least one optionally sybstituted aliphatic and/or cycloaliphatic diamine optionally containing hetero atoms, wherein the ratio of b) : c) may be from 0.95 : 0.05 to 0.5 : 0.5, and

2. a glycidyl compound having more than one epoxy group per molecule and epoxy values of from 0.4 to 0.7, up to 0.30 amine hydrogen equivalents of the polyaminoamide according to 1. being preadducted by the glycidyl compound according to 2., and

C) a solid polyamide formed from
a) dimeric fatty acid and
b) ethylenediamine and optionally
c) at least one optionally substituted aliphatic and/or heterocyclic diamine optionally containing hetero atoms,
wherein the ratio of b) : c) may be varied between 1.0 : 0 to 0.5 : 0.5 equivalents, and
d) at least one short straight-chain aliphatic monocarboxylic acid in amounts of from 0.4 to 0.8 equivalents, based on total acid equivalents,
substantially equivalent amounts of the acid and amine components being used and
wherein A) : B) may be present in substantially equivalent amounts, based on epoxy groups and amine hydrogen atoms, and wherein A) + B) : C) may be present in a ratio of from 9 : 1 to 1.5 : 1 (parts by weight), and

D) solvents free from aromatic substances and, optionally,

E) pigments, dyestuffs wetting agents and flow agents.

2. Use of hardenable synthetic resin mixtures according to claim 1, characterised in that there are used as glycidyl compounds according to A) liquid aromatic glycidyl ethers based on bisphenol A and/or bisphenol F having epoxy values of from 0.4 to 0.56 and liquid aliphatic glycidyl ethers based on neopentyl glycol, glycerol, hexanediol and diglycerol having epoxy values of from 0.6 to 0.7.

3. Use of hardenable synthetic resin mixtures according to claims 1 and 2, characterised in that the polyaminoamide according to B) 1. is a solid polyaminoamide having an amine number of approximately 30 - 60.

4. Use of hardenable synthetic resin mixtures according to claim 3, characterised in that there are used as co-diamines according to B) 1. c) 1-amino-3-aminomethyl-3,5,5-trimethylcyclohexane, 1,2-diaminopropane, 1,6-diamino-2,2,4(2,4,4)-trimethylhexane, 1,12-diamino-4,9-dioxadodecane, 1,6-diaminohexane, 3(4),8(9)-bis(aminomethyl)tricyclo[5.2.1.0$^{2,6}$]-decane (industrial isomeric mixture), piperazine.

5. Use of hardenable synthetic resin mixtures according to claims 1 to 4, characterised in that from 0.05 to 0.30 amine hydrogen equivalents of the polyaminoamide according to B) 1. are preadducted with a glycidyl ether according to B) 2.

6. Use of hardenable synthetic resin mixtures according to any one of claims 1 to 5, characterised in that there are used as the glycidyl compounds according to B) 2. liquid aromatic glycidyl ethers based on bisphenol A and/or bisphenol F having epoxy values of from 0.40 to 0.56 in amounts of from 0.05 to 0.30 equivalents.

7. Use of hardenable synthetic resin mixtures according to any one of claims 1 to 6, characterised in that there are used as the glycidyl compounds according to B) 2. liquid aliphatic glycidyl ethers based on neopentylglycol, glycerol, hexanediol, diglycerol having epoxy values of from 0.6 to 0.7 in amounts of from 0.05 to 0.25 equivalents.

8. Use of hardenable synthetc resin mixtures according to claims 1 to 7, characterised in that there are used as polyamides according to C) solid wax-type polyamides with ring-and-ball melting points $\leqslant 150°C$, there being used as co-diamine according to C) c) 1,6-diaminohexane, 1,6-diamino-2,2,4(2,4,4)-trimethylhexane, 1,13-diamino-4,10-dioxatridecane, piperazine, N-aminoethylpiperazine, 1,3-bis(4-piperidyl)propane, 3(4),8(9)-bis(aminomethyl)-tricyclo[5.2.1.0$^{2,6}$]decane (industrial isomeric mixture) and as monocarboxylic acid according to C) d) acetic acid, propionic acid, butyric acid.

9. A process for printing on surfaces, characterised in that the binders used are synthetic resin mixtures according to claims 1 to 8.

10. Agents for the process of printing on surfaces, characterised in that the binders used are synthetic resin mixtures according to claims 1 to 8.

## Revendications

1. Utilisation de mélanges de résines synthétiques durcissables qui donnent, après l'évaporation du solvant, des pellicules physiquement sèches et limpides et qui durcissent à la température ambiante ou à une température peu élevée, comme liants pour des encres d'impression et pour des vernis de surimpression, utilisation caractérisée en ce que les mélanges de résines synthétiques consistent en

A) des composés glycidyliques comportant plus d'un groupe époxyde par molécule et ayant des indices d'époxyde (ou nombre de groupes époxydes) de 0,4 à 0,7, et

B) au moins un composant résine synthétique solide comportant des groupes amino libres, consistant en un produit d'addition de

1) un excès d'un polyaminoamide obtenu à partir
a) d'un acide gras dimère et
b) de l'éthylène diamine et
c) d'au moins une diamine aliphatique et/ou cycloaliphatique, éventuellement substituée, contenant éventuellement des hétéro-atomes,

le rapport b) : c) pouvant se situer entre 0,95 : 0,05 et 0,5 : 0,5, et

2) un composé glycidylique comportant plus d'un groupe époxyde par molécule et ayant des indices d'époxyde de 0,4 à 0,7,

une proportion allant jusqu'à 0,30 équivalent d'hydrogène amine du polyaminoamide selon 1) étant introduite par pré-addition à l'aide du composé glycidylique selon 2), et

C) un polyamide solide, consistant en
a) de l'acide gras dimère, et
b) de l'éthylène diamine, et éventuellement
c) au moins une diamine aliphatique et/ou hétérocyclique, éventuellement substituée, contenant éventuellement des hétéro-atomes,

le rapport de B) : C) pouvant varier entre 1,0 : 0 et 0,5 : 0,5 équivalent et,

d) au moins un acide monocarboxylique aliphatique à courte chaîne, présent en des quantités de 0,4 à 0,8 équivalent, sur la base des équivalents totaux d'acides, avec utilisation de quantités essentiellement équivalentes des composants acide et amine,

et les composants A et B pouvant être présents selon des rapports A) : B) en des quantités essentiellement équivalentes, sur la base des groupes époxydes et des atomes d'hydrogène d'amine, et les composants A, B et C vont être présents selon un rapport A) + B) : C) compris entre 9 : 1 et 1,5 : 1 (parties en poids), et

D) des solvants dépourvus d'hydrocarbures aromatiques et, éventuellement

E) des pigments, des colorants, des agents de mouillage et des agents de fluidité.

2. Utilisation de mélanges durcissables de résines synthétiques selon la revendication 1, utilisation caractérisée en ce qu'on utilise comme composés glycidyliques selon A) des éthers glycidyliques aromatiques liquides, à base de bisphénol A et/ou de bisphénol F, ayant des valeurs ou indices d'époxydes de 0,4 à 0,56, et des éthers glycidyliques aliphatiques liquides à base du néopentylglycol, du glycérol, de l'éthanediol et du diglycérol, ayant des indices d'époxyde de 0,6 à 0,7.

EP 0 203 349 B1

3. Utilisation de mélanges durcissables de résines synthétiques selon les revendications 1 et 2, caractérisée en ce que le polyaminoamide selon B) 1. est un polyaminoamide solide ayant des indices d'amine d'environ 30 à 60.

4. Utilisation de mélanges durcissables de résines synthétiques selon la revendication 3, caractérisée en ce qu'on utilise comme codiamines selon B) 1. C l'amino-1-aminométhyl-3 triméthyl-3,5,5 cyclohexane, le diamino-1,2 propane, le diamino-1,6 triméthyl-2,2,4(2,4,4) hexane, le diamino-1,12 dioxa-4,9 dodécane, le diamino-1,6 hexane, le bis(aminométhyl)-3(4), 8(9) tricyclo[5,2,1,0$^{2,6}$] décane (mélange technique d'isomères), la pipérazine.

5. Utilisation de mélanges durcissables ou de résines synthétiques selon les revendications 1 à 4, caractérisée en ce qu'on effectue la préaddition de 0,05 à 0,30 équivalent d'hydrogène d'amine du polyamino amide selon B1). avec un éther glycidylique selon B) 2.

6. Utilisation de mélanges durcissables de résines synthétiques selon les revendications 1 à 5, caractérisée en ce qu'on utilise, en des quantités de 0,05 à 0,30 équivalent, comme composé glycidylique selon B) 2, des éthers glycidyliques aromatiques liquides à base de bisphénol A et/ou de bisphénol F, ayant des valeurs de l'indice d'époxyde de 0,40 à 0,56.

7. Utilisation de mélanges durcissables de résines synthétiques selon les revendications 1 à 6, caractérisée en ce qu'on utilise, en des quantités de 0,05 à 0,25 équivalent, comme composé glycidylique selon B) 2, des éthers glycidyliques aliphatiques liquides à base de néopentyl glycol, de glycérol, d'hexanediol, de diglycérol, ayant des valeurs de l'indice d'époxyde de 0,6 à 0,7.

8. Utilisation de mélanges durcissables de résines synthétiques selon les revendications 1 à 5, caractérisée en ce qu'on utilise, comme polyamides selon C), des polyamides cireux solides ayant des points de fusion (méthode de la bille et de l'anneau) inférieurs ou égaux à 150°C, et l'on utilise comme codiamine selon C) c), le diamino-1,6 hexane, le diamino-1,6 triméthyl-2,2,4(2,4,4) hexane, le diamino-1,13 dioxa-4,10 tridécane, la pipérazine, la N-amino éthyl pipérazine, le bis (pipéridyl-4)-1,3 propane, le bis (aminométhyl)-3,(4), 8(9) tricyclo[5,2,1,0$^{2,6}$] décane (mélange technique d'isomères) et, comme acide monocarboxylique selon C) d), l'acide acétique, l'acide propionique ou l'acide butyrique.

9. Procédé pour imprimer des surfaces, caractérisé en ce qu'on utilise comme liant des mélanges de résines synthétiques selon les revendications 1 à 8.

10. Produit pour la mise en oeuvre du procédé d'impression de surfaces, caractérisé en ce qu'on utilise comme liant des mélanges de résines synthétiques selon les revendications 1 à 8.

13